Europäisches Patentamt

European Patent Office

Office européen des brevets

(11) Veröffentlichungsnummer: **0 043 981**

**A1**

## (12) EUROPÄISCHE PATENTANMELDUNG

(21) Anmeldenummer: **81105071.5**

(22) Anmeldetag: **30.06.81**

(51) Int. Cl.³: **H 02 K 1/24**
H 02 K 21/08, H 02 K 1/28

(30) Priorität: 11.07.80 DE 8018686 U
24.11.80 DE 8031234 U

(43) Veröffentlichungstag der Anmeldung:
20.01.82 Patentblatt 82/3

(84) Benannte Vertragsstaaten:
CH DE FR GB IT LI

(71) Anmelder: SIEMENS AKTIENGESELLSCHAFT Berlin
und München
Postfach 22 02 61
D-8000 München 22(DE)

(72) Erfinder: Adelski, Hans-Joachim
Saaleblick 13
D-8741 Salz(DE)

(72) Erfinder: Leitgeb, Wilhelm, Dr.
Martin-Luther-Strasse 26
D-8740 Bad Neustadt(DE)

(72) Erfinder: Voss, Erich, Dr.
Hedwig-Fichtel-Strasse 18
D-8740 Bad Neustadt/Saale(DE)

(54) **Dauermagneterregter Läufer für eine elektrische Maschine.**

(57) Die Erfindung betrifft einen dauermagneterregten Läufer (1) für eine elektrische Maschine. Um eine einfachere Montage der Dauermagnete zu erreichen, wird vorgeschlagen, daß der aus ferromagnetischem Material bestehende Läufer (1) an seinem Umfang kreisförmig oder vieleckig ausgebildet ist und zumindest auf einem Teil der Umfangsfläche des Läufers (1) schalen- oder plattenförmige Dauermagnete (4) befestigt sind.

FIG 1

EP 0 043 981 A1

SIEMENS AKTIENGESELLSCHAFT
Berlin und München

Unser Zeichen
VPA 80 P 3105 E

Dauermagneterregter Läufer für eine elektrische Maschine

Die Erfindung bezieht sich auf einen dauermagneterregten Läufer für eine elektrische Maschine.

Ein solcher Läufer ist durch die DE-OS 15 63 040 bekannt. Bei diesem Läufer sind die Dauermagnete radial zwischen einzelnen segmentförmigen Blechpaketen angeordnet. Die Blechpakete selbst werden durch eine auf der Welle befestigte Hülse gehalten, die hierfür mit sternförmig angeordneten Armen versehen ist, welche in Ausnehmungen der Blechpakete eingreifen. Ein solcher Läufer ist relativ montageaufwendig.

Der Erfindung liegt die Aufgabe zugrunde, einen dauermagneterregten Läufer zu schaffen, der einfacher montierbar ist.

Die Lösung der gestellten Aufgabe gelingt nach der Erfindung dadurch, daß der aus ferromagnetischem Material bestehende Läufer an seinem Umfang kreisförmig oder vieleckig ausgebildet ist und zumindest auf einem Teil der Fläche am Außenumfang des Läufers schalen- oder plattenförmige Dauermagnete befestigt sind. Ein solcher Läufer kann aus einstückigen, mit einer Wellenöffnung versehenen Blechen hergestellt werden. Die Dauermagnete werden von außen auf die Fläche am Umfang des Läufers aufgelegt und befestigt. Die Befestigung der Dauermagnete kann durch Kleben und/oder durch um die Dauermagnete gelegte Befestigungsmittel erfolgen.

Ml 2 Ts / 29.04.1981

Dadurch, daß die Befestigungsmittel im Bereich der Dauermagnete aus magnetischem Material und im Bereich der freien Räume zwischen den Dauermagneten aus amagnetischem Material bestehen, wird einer Entmagnetisierung der Dauermagnete durch die Luftspaltfelder entgegengewirkt.

Trotz der Anordnung der Dauermagnete am Außenumfang des Läufers weisen derartige Läufer noch eine relativ große Hauptfeldreaktanz in der Längsachse auf. Nach einer weiteren Ausgestaltung der Erfindung gelingt es die Hauptfeldreaktanz in der Längsachse dadurch zu verringern, daß zwischen den Dauermagneten elektrische Leiter angeordnet sind, die an beiden Stirnseiten der Dauermagnete über Kurzschlußringe, die sich über den Umfang des Läufers erstrecken, miteinander verbunden sind.

Eine einfache Montage der Kurzschlußringe und Leiter ist dadurch möglich, daß die Leiter und Kurzschlußringe einteilig ausgebildet sind. Dadurch, daß am Läuferumfang ein der Größe und Form der Dauermagnete entsprechende Öffnungen aufweisendes, zu einem Ring verbundenes Blech aus elektrisch leitfähigem Material angeordnet ist, wird sowohl eine einfache Montage als auch eine einfache Herstellung der Leiter und Kurzschlußringe erzielt.

Anhand eines in der Zeichnung dargestellten Ausführungsbeispiels wird der Anmeldungsgegenstand nachfolgend näher beschrieben. Es zeigt

Fig. 1 einen dauermagneterregten Läufer im Schnitt,
Fig. 2 einen Teilschnitt eines dauermagneterregten Läufers mit magnetischem Befestigungsmaterial im Bereich der Dauermagnete,

Fig. 3 einen weiteren dauermagneterregten Läufer im Schnitt,

Fig. 4 eine Abwicklung des in Fig. 3 dargestellten Läufers.

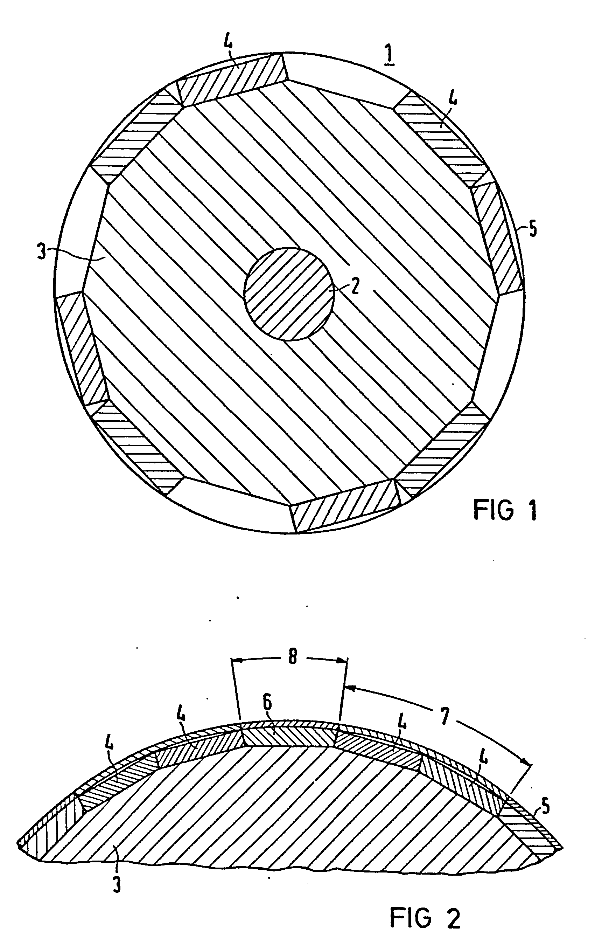

Der in Fig. 1 dargestellte Läufer 1 weist ein auf der Läuferwelle 2 angeordnetes Blechpaket 3 auf. Das Blechpaket 3 ist an seinem Außenumfang vieleckig ausgebildet, so daß ebene Flächen am Außenumfang des Blechpaketes 3 entstehen. Auf diese ebenen Flächen sind plattenförmige Dauermagnete 4 aufgelegt und befestigt. Die Befestigung der Dauermagnete 4 kann entweder durch Verkleben am Blechpaket 3 oder durch gesonderte Befestigungsmittel, z.B. eine um die Dauermagnete 4 gewickelte Bandage 5 erfolgen. Es besteht auch die Möglichkeit, die Dauermagnete 4 sowohl zu verkleben, als auch durch eine Bandage 5 zu sichern.

Bei der Darstellung nach Fig. 2 ist der Raum zwischen den Dauermagneten 4 mit amagnetischem Material 6 ausgefüllt. Ferner bestehen bei dieser Ausführungsform des Läufers die Befestigungsmittel im Bereich 7 der Dauermagnete 4 aus magnetischem Material. Hierdurch wird eine Abschirmung der Dauermagnete 4 gegenüber entmagnetisierenden Luftspaltfeldern erreicht. Im Bereich 8, welcher den freien Raum zwischen den Dauermagneten 4 darstellt, bestehen die Befestigungsmittel aus amagnetischem Material.

Bei dem beschriebenen Läufer sind die Dauermagnete ausreichend gegen die Beanspruchung der Fliehkräfte gesichert. Außerdem zeichnet sich dieser Läufer durch geringe Streuflußverluste bei den Dauermagneten aus.

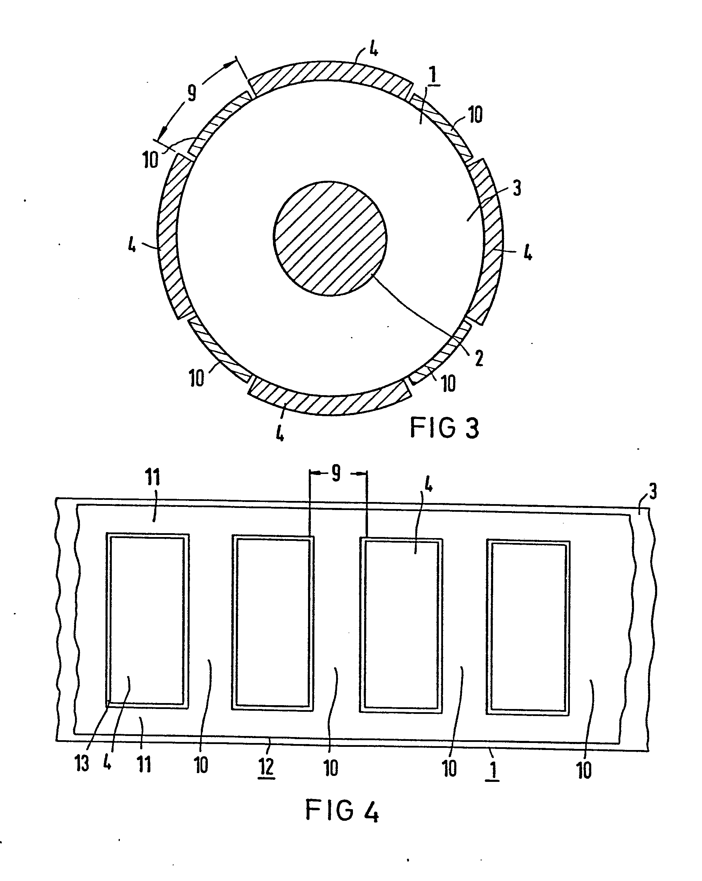

Der in Fig. 3 dargestellte Läufer 1 weist ebenfalls ein auf der Läuferwelle 2 angeordnetes Blechpaket 3 auf.

Am Außenumfang des Blechpaketes 3 sind schalenförmige Dauermagnete 4 befestigt. Das Blechpaket 3 kann an seinem Außenumfang auch vieleckig ausgebildet sein, so daß plattenförmige Dauermagnete an dem Blechpaket 3 befestigt werden können. Wie die Fig. 3 zeigt, sind die schalenförmigen Dauermagnete 4 mit einem Abstand 9 zueinander an dem Blechpaket 3 angeordnet. In dem durch diesen Abstand 9 zwischen den Dauermagneten 4 gebildeten Bereich sind aus elektrisch leitfähigem Material bestehende elektrische Leiter 10 angeordnet. Diese elektrischen Leiter 10 sind flächenförmig und entsprechend der runden Außenkontur des Blechpaketes 3 schalenförmig ausgebildet. Bei einer Ausführung des Blechpaketes 3 als Vieleck werden die elektrischen Leiter 10 entsprechend plattenförmig ausgeführt. An den beiden Stirnseiten der Dauermagnete 4 sind die Leiter 10 durch Kurzschlußringe 11 verbunden.

Wie aus der Darstellung nach Fig. 4 erkennbar, ist an dem Läuferumfang ein Blech 12 angeordnet. Ein solches Blech kann aus Kupfer oder Aluminium bestehen. In diesem Blech sind der Form und Größe der Dauermagnete 4 angepaßte Öffnungen 13 vorgesehen. Das Blech 12 wird auf das Blechpaket 3 aufgelegt und zu einem Ring verbunden. Die Blechstege zwischen den Dauermagneten 4 bilden die Leiter 10 und die stirnseitigen Stege die Kurzschlußringe 11. Ein solches mit Öffnungen 13 versehenes Blech 12 läßt sich in einfacher Weise durch Stanzen herstellen.

Sowohl die Dauermagnete 4 als auch das Blech 12 können auf das Blechpaket 3 aufgeklebt werden. Bei einem Innenläufer besteht auch die Möglichkeit, die Dauermagnete 4 und das Blech 12 durch Bandagen auf dem Blechpaket zu haltern.

Patentansprüche

1. Dauermagneterregter Läufer für eine elektrische Maschine, d a d u r c h   g e k e n n z e i c h n e t , daß der aus ferromagnetischem Material bestehende Läufer (1) an seinem Umfang kreisförmig oder vieleckig ausgebildet ist und zumindest auf einem Teil der Fläche am Außenumfang des Läufers (1) schalen- oder plattenförmige Dauermagnete (4) befestigt sind.

2. Läufer nach Anspruch 1, d a d u r c h   g e k e n n - z e i c h n e t , daß die Dauermagnete (4) auf die Flächen aufgeklebt sind.

3. Läufer nach Anspruch 1 oder 2, d a d u r c h   g e - k e n n z e i c h n e t , daß Befestigungsmittel um die Dauermagnete (4) gelegt sind.

4. Läufer nach Anspruch 3, d a d u r c h   g e k e n n - z e i c h n e t , daß die Befestigungsmittel im Bereich (7) der Dauermagnete (4) aus magnetischem Material und im Bereich (8) der freien Räume zwischen den Dauermagneten (4) aus amagnetischem Material (6) bestehen.

5. Läufer nach einem der vorhergehenden Ansprüche, d a d u r c h   g e k e n n z e i c h n e t , daß zwischen den Dauermagneten (4) elektrische Leiter (10) angeordnet sind, die an beiden Stirnseiten der Dauermagnete (4) über Kurzschlußringe (11), die sich über den Umfang des Läufers (1) erstrecken, miteinander verbunden sind.

6. Dauermagneterregter Läufer nach Anspruch 5, d a - d u r c h   g e k e n n z e i c h n e t , daß die Leiter (10) und die Kurzschlußringe (11) einteilig ausgebildet sind.

7. Dauermagneterregter Läufer nach Anspruch 6, d a - d u r c h   g e k e n n z e i c h n e t , daß am Läuferumfang ein der Größe und Form der Dauermagnete (4) entsprechende Öffnungen (13) aufweisendes, zu einem Ring verbundenes Blech (12) aus elektrisch leitfähigem Material angeordnet ist.

FIG 1

FIG 2

FIG 3

FIG 4

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | H 02 K 1/24 |
| | <u>FR - A - 2 267 650</u> (TELDIX) | 1,2,5 | H 02 K 21/08 |
| | | | H 02 K 1/28 |
| | * Seite 9, Zeile 25 - Seite 10, Zeile 26 * | | |
| | -- | | |
| | <u>FR - A - 2 018 172</u> (BENDIX) | 1-4 | |
| | * Seite 2, Zeile 8 - Seite 3, Zeile 9 * | | |
| | -- | | |
| | <u>FR - A - 1 388 922</u> (BEREX) | 1,2 | **RECHERCHIERTE SACHGEBIETE (Int. Cl.³)** |
| | * Seite 2, linke Spalte, Zeilen 26 bis 46; Seite 3, rechte Spalte, Zeilen 6 bis 11 * | | H 02 K 1/24 |
| | | | H 02 K 21/08 |
| | -- | | H 02 K 1/28 |
| | <u>FR - A - 2 403 676</u> (SONY) | 1 | |
| | * Seite 11, Zeilen 1 bis 12; Figuren 2 und 3 * | | |
| | -- | | |
| | <u>CH - A - 334 443</u> (PHILIPS) | 1,4 | |
| | * Seite 2, Zeilen 29-81 * | | |
| | -- | | **KATEGORIE DER GENANNTEN DOKUMENTE** |
| | <u>FR - A - 2 162 595</u> (THE UNIVERSITY OF SOUTHHAMPTON) | 2,5 | X: von besonderer Bedeutung |
| | | | A: technologischer Hintergrund |
| | * Seite 8, Zeilen 17 bis 25 * | | O: nichtschriftliche Offenbarung |
| | | | P: Zwischenliteratur |
| | -- | | T: der Erfindung zugrunde |
| | <u>US - A - 2 432 436</u> (MORRILL) | 4,5 | liegende Theorien oder |
| | | | Grundsätze |
| | * Spalte 3, Zeile 66 - Spalte 5, Zeile 1 * | | E: kollidierende Anmeldung |
| | -- | | D: in der Anmeldung angeführtes |
| | ./. | | Dokument |
| | | | L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |
| Recherchenort Den Haag | Abschlußdatum der Recherche 02-10-1981 | Prüfer RANDES | |

EPA form 1503.1 06.78

**Europäisches Patentamt**

**EUROPÄISCHER RECHERCHENBERICHT**

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | US - A - 4 117 360 (RICHTER)<br><br>* Spalte 3, Zeilen 11-43 *<br><br>-- | 5-7 |
| | DE - A - 2 823 683 (MERKLE)<br><br>* Seite 5, Zeilen 1 bis 14 *<br><br>-- | 6,7 |
| P,E | FR - A - 2 457 031 (LUCAS)<br><br>* Seite 2, Zeilen 19 bis 37 *<br><br>-- | 1,3,4 |
| A | EP - A - 0 013 157 (GARRET)<br><br>* Seite 9, Zeilen 12 bis 24 *<br><br>-- | 1,3,4 |
| A | GB - A - 749 480 (NATIONAL RE-SEARCH)<br><br>* Seite 1, Zeilen 53 bis 67 *<br><br>-- | 4 |
| A | FR - A - 1 017 193 (PLANSEE) | 4 |
| A | GB - A - 763 094 (THOMSON-HOUSTON) | |

KLASSIFIKATION DER ANMELDUNG (Int.Cl. ³)

RECHERCHIERTE SACHGEBIETE (Int. Cl. ³)

EPA Form 1503.2 06.78